# EUROPEAN PATENT APPLICATION

(11) **EP 4 583 216 A1**
(43) Date of publication of application: **09.07.2025**
(21) Application number: 23927147.1
(22) Date of filing: 16.11.2023
(51) Int. Cl.: H01M 10/04, H01M 4/13

(54) **BATTERY CELL, METHOD FOR MANUFACTURING BATTERY CELL, BATTERY, AND ELECTRIC APPARATUS**

(30) Priority: 13.03.2023 CN 202310238510
(71) Applicant: Contemporary Amperex Technology (Hong Kong) Limited, Central (HK)
(72) Inventor: XU, Xiaofu, Ningde, Fujian 352100 (CN)
(74) Representative: Ran, Handong
(86) International application number: PCT/CN2023/132032
(87) International publication number: WO 2024/187806

(57) **Abstract**

The present disclosure provides a battery cell, a method for manufacturing a battery cell, a battery, and an electric apparatus. The battery cell comprises: an electrode assembly, comprising: a positive electrode plate comprising a positive electrode current collector and a positive electrode active material layer at least located on the surface on one side of the positive electrode current collector; a negative electrode plate comprising a negative electrode current collector; a separator located between the positive electrode plate and the negative electrode plate; and an insulating member located at one end of the negative electrode plate and/or the positive electrode plate that is not covered by the separator.

## Description

### TECHNICAL FIELD

The present disclosure relates to the field of batteries, and in particular, to a battery cell, a method for manufacturing a battery cell, a battery, and an electric device.

### BACKGROUND

Currently, lithium-ion batteries dominate the field of power batteries, and also face significant challenges, including the growing scarcity of lithium resources, surging prices of upstream materials, delayed development of recycling technologies, low recycling rates of old batteries, and the like. Sodium-ion batteries achieve charging and discharging through the deintercalation of sodium ions between the positive electrode and the negative electrode. Given the greater abundance, wider distribution, and significantly lower cost of sodium resources compared to lithium resources, sodium-ion batteries hold strategic importance in cost-sensitive application fields such as energy storage. However, numerous problems remain to be solved in the industrial production and application of metal-ion batteries.

### SUMMARY

In one aspect of the present application, the present application provides a battery cell, including: an electrode assembly, the electrode assembly including: a positive electrode plate, the positive electrode plate including a positive electrode current collector and a positive electrode active material layer at least located on a surface of one side of the positive electrode current collector; a negative electrode plate, the negative electrode plate including a negative electrode current collector; a separator, the separator being located between the positive electrode plate and the negative electrode plate; and an insulating member, the insulating member being located at one end of the negative electrode plate and/or the positive electrode plate that is not cladded by the separator. Therefore, the occurrence of internal short circuit phenomenon in the battery cell can be effectively reduced.

According to an embodiment of the present application, the insulating member is configured to block the metal deposited on the negative electrode current collector from moving towards the positive electrode plate. As a result, the occurrence of short circuit phenomenon caused by the overlapping of metal on the surface of the negative electrode current collector with the positive electrode plate can be reduced.

According to an embodiment of the present application, the positive electrode active material layer includes a sodium-containing positive electrode active material, and the metal deposited on the negative electrode current collector is a sodium metal. Therefore, it is conducive to improving the energy density of the battery cell and reducing the manufacturing cost of the battery cell.

According to an embodiment of the present application, the insulating member and the separator are of a one-piece structure. Therefore, through the one-piece structure design of the insulating member and the separator, the occurrence of short circuit phenomenon can be reduced without requiring additional components.

According to an embodiment of the present application, two adjacent layers of the separators are connected to form the insulating member. Therefore, adjacent separators can be connected to form an insulating member when or after the separators are disposed, enabling flexible adjustment of process steps and optimization of the process flow without requiring additional components.

According to an embodiment of the present application, the separator and the insulating member are separately disposed, and two adjacent layers of the separators are connected through the insulating member. Therefore, the insulating members can be disposed when or after the separators are disposed, such that the process steps can be flexibly adjusted and the process flow can be optimized.

According to an embodiment of the present application, the insulating member is connected to the end portions of the two adjacent layers of the separators, respectively. Therefore, the coverage of the insulating member on the surface of the separator relative to the positive electrode plate can be reduced while reducing the occurrence of internal short circuit phenomenon in the battery cell achieved through the insulating member, thereby facilitating better ionic conductivity of the separator.

According to an embodiment of the present application, a porosity of the insulating member at 25 °C is not greater than 10%. Therefore, the pore structure of the insulating member can effectively reduce the movement of metal from the negative electrode plate to the positive electrode plate.

According to an embodiment of the present application, the insulating member includes at least one of polypropylene, polyethylene, ethylene acrylic acid copolymer, and ion-crosslinked polymer resin. Therefore, the insulation performance of the insulating member can be further improved.

According to an embodiment of the present application, a pore diameter of the insulating member is not greater than 50 nm. Therefore, the pore structure of the insulating member can effectively confine the metal within the accommodating space formed by the insulating member, reducing the movement of metal from the negative electrode plate to the positive electrode plate.

According to an embodiment of the present application, the porosity of the insulating member at 25 °C is 20% to 50%, and the porosity of the insulating member at a pore-closing temperature is not greater than 10%. Therefore, the insulating member functions to conduct the migration of conductive ions between the positive electrode plate and the negative electrode plate, and reduce the movement of metal from the negative electrode plate to the positive electrode plate.

According to an embodiment of the present application, the pore-closing temperature of the insulating member is 60 °C to 97 °C; preferably, the pore-closing temperature of the insulating member is 80 °C to 97 °C. Therefore, the insulating member undergoes a pore-closing phenomenon at higher temperatures, which can satisfy the relatively high operating temperature requirements of the battery cell.

According to an embodiment of the present application, the insulating member includes a substrate and a coating, the substrate includes at least one of polyethylene and polypropylene, and the coating includes at least one of polyethylene, Al₂O₃, γ-AlOOH, SiO₂, ZrO₂, CaO, and MgO. Therefore, the insulating member exhibits the characteristics of open pores at normal temperature and closed pores at high temperatures.

According to an embodiment of the present application, the pore diameter of the insulating member at 25 °C is 0.05 µm to 1 µm, and the pore diameter of the insulating member at a pore-closing temperature is not greater than 50 nm. Therefore, the insulating member can achieve the conduction of ions under normal temperature conditions, while blocking the movement of metal from the negative electrode plate to the positive electrode plate at high temperatures.

According to an embodiment of the present application, the insulating member is of a porous structure, and the porous structure is configured to accommodate the metal deposited on the negative electrode current collector. Therefore, the metal can be absorbed through the arrangement of the insulating member.

According to an embodiment of the present application, the insulating member is disposed correspondingly at least on an end surface of the negative electrode plate that is not cladded by the separator. Therefore, the metal can be effectively accommodated inside the insulating member, and the occurrence of short circuit phenomenon caused by the overlapping of metal on the surface of the negative electrode current collector with the positive electrode plate can be effectively reduced.

According to an embodiment of the present application, the insulating member includes at least one of lignocellulose, foamed plastic polymer, polyether, polyvinyl alcohol, and polyester. Therefore, the insulating member can have better insulation performance and more internal pore structures.

According to an embodiment of the present application, the porosity of the insulating member is 30% to 80%. Therefore, the insulating member provides sufficient space inside to accommodate the metal.

According to an embodiment of the present application, the pore diameter of the insulating member is 0.5 µm to 100 µm. Therefore, the size of the pore structure of the insulating member allows the metal to be accommodated inside the insulating member, and facilitates rapid dispersion of the molten metal in the pore structure inside the insulating member.

According to an embodiment of the present application, the insulating member is an insulating coating, and the insulating coating at least covers an end surface of the negative electrode plate that is not cladded by the separator. Therefore, the effect of blocking the metal on the surface of the negative electrode current collector from moving towards the positive electrode plate can be achieved through a simple coating arrangement.

According to an embodiment of the present application, the insulating coating covers the end surface of the electrode assembly that is not cladded by the separator. Therefore, by providing the insulating coating on the end surface of the positive electrode plate, the negative electrode plate, and other structures that are not cladded by the separator, the occurrence of short circuit phenomenon inside the battery cell caused by the overlapping of metal on the surface of the negative electrode current collector with the positive electrode plate can be further reduced.

According to an embodiment of the present application, the surface of one side of the insulating member away from the negative electrode plate is provided with an insulating sheet. Therefore, by providing the insulating sheet, additional protection can be achieved in the event of failure of the insulating member.

According to an embodiment of the present application, the battery cell is a negative electrode-free sodium battery cell. Therefore, the negative electrode-free sodium battery has a high energy density.

In another aspect of the present application, the present application provides a method for manufacturing a battery cell, including: forming an electrode assembly from a positive electrode plate, a separator, and a negative electrode plate through a winding or stacking process; and disposing an insulating member at one end of the negative electrode plate and/or the positive electrode plate that is not cladded by the separator. Therefore, an insulating member structure can be disposed in the battery cell through a relatively simple method, and the arrangement of the insulating member can effectively reduce the occurrence of internal short circuit phenomenon in the battery cell.

According to an embodiment of the present application, end portions of two adjacent layers of the separators proximal to the end of the negative electrode plate and/or the positive electrode plate that is not cladded by the separators are connected to form the insulating member. Therefore, adjacent separators can be connected to form an insulating member through a relatively simple process without the arrangement of additional components.

According to an embodiment of the present application, two adjacent layers of the separators are connected through the insulating member. Therefore, the process sequence of disposing the insulating member can be flexibly selected, thereby optimizing the process flow and improving the process efficiency.

According to an embodiment of the present application, at least an end surface of the negative electrode plate that is not cladded by the separator is coated with the insulating member. Therefore, the insulating member can be formed through a simple coating process.

According to an embodiment of the present application, an insulating sheet is disposed on one side of the insulating member away from the negative electrode plate. Through the above solution, the insulation performance of the electrode assembly can be further improved.

In yet another aspect of the present application, the present application provides a battery, including the aforementioned battery cell, and/or the battery cell manufactured using the aforementioned method. Therefore, the battery has all the features and advantages of the aforementioned battery cell and/or the aforementioned method for manufacturing a battery cell, which are not further detailed here.

In yet another aspect of the present application, the present application provides an electric device, including the aforementioned battery cell, and/or the battery cell manufactured using the aforementioned method, and/or the aforementioned battery. Therefore, the battery has all the features and advantages of the aforementioned battery cell, and/or the aforementioned method for manufacturing a battery cell, and/or the aforementioned battery, which are not further detailed here.

### BRIEF DESCRIPTION OF THE DRAWINGS

The above and/or additional aspects and advantages of the present application will become apparent and readily understood from the following description of embodiments in conjunction with the accompanying drawings below, in which:
FIG. 1 illustrates a schematic structural diagram of a battery cell in a fully discharged state according to one embodiment of the present application;
FIG. 2 illustrates a schematic structural diagram of a battery cell in a fully charged state according to another embodiment of the present application;
FIG. 3 illustrates a schematic structural diagram of a battery cell in a fully charged state according to another embodiment of the present application;
FIG. 4 illustrates a schematic structural diagram of a battery cell in a fully discharged state according to another embodiment of the present application;
FIG. 5 illustrates a schematic structural diagram of a battery cell in a fully charged state according to another embodiment of the present application;
FIG. 6 illustrates a schematic structural diagram of a battery cell in a fully discharged state according to another embodiment of the present application;
FIG. 7 illustrates a schematic structural diagram of a battery cell in a fully charged state according to another embodiment of the present application;
FIG. 8 illustrates a schematic structural diagram of a battery cell in a fully charged state according to another embodiment of the present application;
FIG. 9 illustrates a schematic structural diagram of a battery cell in a fully charged state according to another embodiment of the present application;
FIG. 10 illustrates a schematic structural diagram of a battery cell in a fully charged state according to another embodiment of the present application;
FIG. 11 illustrates a schematic structural diagram of a battery cell in a fully charged state according to another embodiment of the present application;
FIG. 12 illustrates a schematic diagram of a battery according to one embodiment of the present application;
FIG. 13 illustrates an exploded view of the battery according to one embodiment of the present application shown in FIG. 12;
FIG. 14 illustrates a schematic diagram of a battery module according to one embodiment of the present application;
FIG. 15 illustrates a schematic diagram of a battery pack according to one embodiment of the present application;
FIG. 16 illustrates an exploded view of the battery pack according to one embodiment of the present application shown in FIG. 15; and
FIG. 17 illustrates a schematic diagram of an electric device using a battery as a power source according to one embodiment of the present application.

### Description of the reference numerals:

1: battery pack; 2: upper case; 3: lower case; 4: battery module; 5: battery cell; 10: negative electrode plate; 11: negative electrode current collector; 12: metal layer; 20: positive electrode plate; 21: positive electrode current collector; 22: positive electrode active material layer; 30: separator; 31: connection structure; 40: insulating member; 51: housing; 52: electrode assembly; 53: cover plate.

### DETAILED DESCRIPTION

The embodiments of the present disclosure are described in detail hereinafter, with examples of the embodiments illustrated in the accompanying drawings. Throughout the accompanying drawings, the same or similar reference numbers indicate the same or similar elements or elements having the same or similar functions. The embodiments described hereinafter with reference to the accompanying drawings are exemplary and are only intended to explain the present disclosure. They should not be construed as limiting the scope of the present disclosure.

In the description of the present disclosure, it should be understood that directions or positional relationships indicated by the terms "length", "width", "thickness", "upper", "lower", "front", "rear", "left", "right", and the like are those shown based on the accompanying drawings, are merely intended to facilitate and simplify description rather than to indicate or imply that the indicated apparatus or element must have a specific direction and be structured and operated according to the specific direction, and should not be construed as limiting the present disclosure.

In the description of the present application, "identical chemical compositions" should be understood in a broad sense, that is, the main components of the two have identical chemical compositions, or the chemical compositions of the two are substantially identical, with permissible variations or impurities within the range understandable to those skilled in the art.

In the description of the present application, "A and/or B" may include any of the following cases: A alone, B alone, and A and B, where A and B are only used for examples, and they may refer to any technical features connected by "and/or" as used in the present application.

Unless otherwise indicated, all scientific and technical terms used in the present application have the same meaning as commonly understood by those skilled in the art to which the present application belongs. All patents and publications referred to in the present application are incorporated herein by reference in their entirety. The terms "contain", "comprise", and "include" are intended to be open-ended expressions, that is, they encompass the elements specified in the present application but do not exclude other elements.

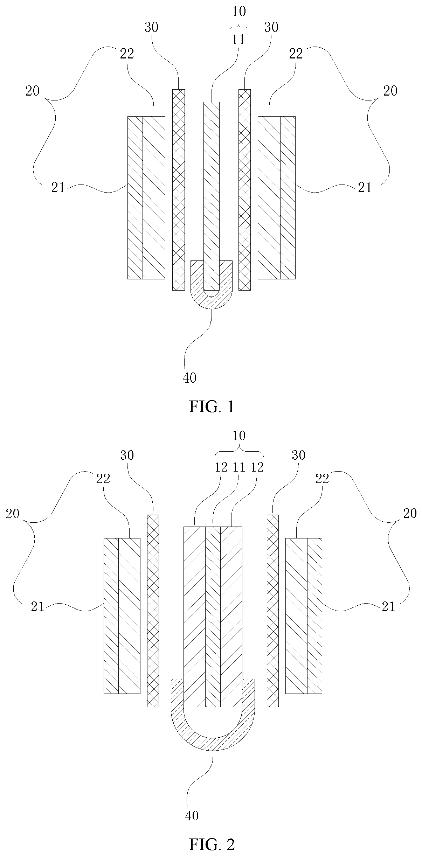

In the present application, taking a sodium metal battery as an example, where during the charging process of the battery cell 5, the positive electrode active material undergoes desodiation and sodium is deposited in situ on the surface of the negative electrode current collector 11, during the charging process of the battery cell 5, referring to FIG. 1, when the battery cell 5 is in a fully discharged state, the negative electrode plate 10 includes the negative electrode current collector 11; referring to FIG. 2, as the sodium ions in the positive electrode active material layer 22 are gradually deintercalated and deposited on the surface of the negative electrode current collector 11 during the charging process, the metal layer 12 is gradually generated on the surface of the negative electrode current collector 11, that is, the volume of the negative electrode plate 10 gradually increases, and the volume of the negative electrode plate 10 reaches a maximum value when the battery cell 5 is fully charged. A fully charged state refers to a state in which the state of charge (SOC) of the battery cell 5 is 100%. Certainly, a fully charged state may also refer to other SOC levels of the battery cell 5, for example, a state in which the SOC is greater than 90%, which is not limited here by the present application.

A fully discharged state refers to a state in which the state of charge (SOC) of the battery cell 5 is 0%. Certainly, a fully discharged state may also refer to other SOC levels of the battery cell 5, for example, a state in which the SOC is less than 5%, which is not limited here by the present application.

In some cases, during the charging process of the battery cell 5, the metal layer 12 on the surface of the negative electrode current collector 11 undergoes continuous expansion. When the expansion volume of the metal layer 12 becomes excessive, due to the relatively soft texture of the metal layer 12, the metal layer 12 is extruded out along the end surface of the negative electrode plate 10 that is not cladded by the separator 30, resulting in accumulation at the end surface. Subsequently, the metal layer 12 gradually spreads along a gap between the end surface of the negative electrode plate 10 that is not cladded by the separator 30 and the housing to the end surface of the positive electrode plate 20 that is not cladded by the separator 30, and ultimately overlaps with the positive electrode plate 20, causing a short circuit inside the battery cell 5.

In some cases, the temperature of the battery cell 5 rises during operation. Taking the positive electrode active material layer 22 that includes a sodium-containing positive electrode active material as an example, during the charging process of the battery cell 5, the sodium ions in the positive electrode active material migrate to the surface of the negative electrode current collector 11, and are deposited on the surface of the negative electrode current collector 11 to form a sodium metal layer (i.e., the metal layer 12). As the temperature of the battery continues to rise, the sodium metal layer on the surface of the negative electrode current collector 11 melts. For example, when the end surface of the negative electrode plate 10 and/or the positive electrode plate 20 that is not cladded by the separator 30 is disposed downward, the elemental sodium in the metal layer 12 on the surface of the negative electrode current collector 11 slowly flows down from the surface of the negative electrode current collector 11 after melting at high temperatures, and gradually spread and are deposited along the gap between the electrode assembly and the housing, such as the bottom gap of the battery cell 5, until it contacts the positive electrode plate 20. This ultimately results in the formation of an overlap between the negative electrode plate 10 and the positive electrode plate 20 through the conductive sodium, thereby causing a short circuit.

In some cases, during the cyclic charge and discharge process of the battery cell 5, a precipitated sodium material that cannot participate in the charge and discharge cycle of the battery cell 5 again is generated. The precipitated sodium material is also prone to accumulating on the end surface of the negative electrode plate 10 that is not cladded by the separator 30, and then gradually spreads along the end surface of the negative electrode plate 10 that is not cladded by the separator 30 to the end surface of the positive electrode plate 20 that is not cladded by the separator 30, achieving an overlap and thereby causing a short circuit phenomenon inside the battery cell 5.

In the embodiments of the present application, by disposing the insulating member 40 at one end of the negative electrode plate 10 and/or the positive electrode plate 20 that is not cladded by the separator 30, the overlap between the metal material on the surface of the negative electrode current collector 11 and the positive electrode plate 20 during the charging process of the battery cell 5 is effectively prevented, thereby reducing the occurrence of internal short circuit in the battery cell 5.

The battery cell 5 disclosed in the embodiments of the present application can be used in, but is not limited to be used in, electric devices such as vehicles, ships, or aircraft. The power source system of the electric device can be composed of the battery cell 5, the battery, or the like disclosed in the present application.

The embodiments of the present application provide an electric device that uses the battery cell 5 and/or the battery as the power source. The electric device may be, but is not limited to, a mobile phone, a tablet, a laptop computer, an electric toy, an electric tool, an electric bicycle, an electric vehicle, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

It should be understood that the technical solutions described in the embodiments of the present application are not limited to be applicable to the batteries and electric devices described above. They are also applicable to all batteries that include the battery cell 5, as well as electric devices that utilize batteries. However, for brevity, the following embodiments are described using an electric vehicle as an example.

In one aspect of the embodiments of the present application, the present application provides a battery cell 5, referring to FIG. 1, including: an electrode assembly, the electrode assembly including: a positive electrode plate 20, the positive electrode plate 20 including a positive electrode current collector 21 and a positive electrode active material layer 22 located at least on the surface of one side of the positive electrode current collector 21; a negative electrode plate 10, the negative electrode plate 10 including a negative electrode current collector 11; a separator 30, the separator 30 being located between the positive electrode plate and the negative electrode plate 10; and an insulating member 40, the insulating member 40 being located at one end of the negative electrode plate 10 and/or the positive electrode plate 20 that is not cladded by the separator 30.

In the embodiments of the present application, the battery cell 5 may be a metal battery. In some embodiments, the battery cell 5 may be a sodium metal battery, a lithium metal battery, or the like.

In some embodiments, the electrode assembly is of a wound structure. The positive electrode plate 20 and the negative electrode plate 10 are wound to form a wound structure.

In some embodiments, the electrode assembly is of a stacked structure.

As an example, a plurality of positive electrode plates 20 and a plurality of negative electrode plates 10 may be disposed respectively, and the plurality of positive electrode plates 20 and the plurality of negative electrode plates 10 are alternately stacked.

As an example, a plurality of positive electrode plates 20 may be disposed, and the negative electrode plate 10 is folded to form a plurality of stacked folded segments, with one positive electrode plate 20 disposed between adjacent folded segments.

As an example, the positive electrode plate 20 and the negative electrode plate 10 are both folded to form a plurality of stacked folded segments.

As an example, a plurality of separators 30 may be disposed, and each separator 30 is disposed between any adjacent positive electrode plates 20 or negative electrode plates 10 separately.

As an example, the separators 30 may be disposed continuously between any adjacent positive electrode plates 20 or negative electrode plates 10 by means of folding or winding.

In some embodiments, the shape of the electrode assembly may be cylindrical, flat, multi-prismatic, or the like.

In some embodiments, the electrode assembly is provided with a tab that can conduct current out from the electrode assembly. The tab includes a positive tab and a negative tab.

In some embodiments, the battery cell 5 may include a shell. The shell is used to encapsulate components such as electrode assemblies and electrolytes. The shell may be a steel housing, an aluminum housing, a plastic housing (such as polypropylene), a composite metal housing (such as a copper-aluminum composite housing), an aluminum-plastic film, or the like.

As an example, the battery cell may be a cylindrical battery cell, a prismatic battery cell, a soft-pack battery cell, or a battery cell of other shapes. The prismatic battery cell includes a square-housing battery cell, a blade-shaped battery cell, and a multi-prismatic battery. The multi-prismatic battery may be a hexagonal prismatic battery or the like, and there is no particular limitation in the present application.

In some embodiments, the positive electrode plate 20 may include a positive electrode current collector 21 and a positive electrode active material layer 22 disposed on at least the surface of one side of the positive electrode current collector 21.

As an example, the positive electrode current collector 21 has two surfaces opposite to each other in a thickness direction thereof, and the positive electrode active material layer 22 is disposed on either or both of the two opposite surfaces of the positive electrode current collector 21.

As an example, the positive electrode current collector 21 may be made of metal foil, foam metal, or composite current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer 12. The foam metal may be foam nickel, foam copper, foam aluminum, foam alloy, foam carbon, or the like. The composite current collector can be fabricated by forming a metal material (aluminum, aluminum alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

In some embodiments, the positive electrode active material may include at least one of a sodium transition metal oxide, a polyanionic compound, and a Prussian blue compound.

In some embodiments, the chemical formula of the sodium transition metal oxide may satisfy NaₓMO₂, where M is one or more of Ti, V, Mn, Co, Ni, Fe, Zn, V, Zr, Ce, Cr, and Cu, and 0 < x ≤ 1.

As an example, x in NaₓMO₂ may be 0.1, 0.2, 0.3, 0.4, 0.5, 0.6, 0.7, 0.8, 0.9, or 1.

In some embodiments, the sodium transition metal oxide may be a sodium transition metal oxide modified by doping, and the doping modification of the sodium transition metal oxide may include at least one of sodium-site doping modification, oxygen-site doping modification, transition metal-site doping modification, and surface coating modification.

In some embodiments, the polyanionic compound may be a class of compounds having sodium ions, transition metal ions, and tetrahedral (YO₄)ⁿ⁻ anion units. The transition metal may include at least one of Mn, Fe, Ni, Co, Cr, Cu, Ti, Zn, V, Zr, and Ce; Y may include at least one of P, S, and Si; and n represents the valence state of (YO₄)ⁿ⁻.

In some embodiments, the polyanionic compound may also be a class of compounds having sodium ions, transition metal ions, tetrahedral (YO₄)ⁿ⁻ anion units, and halogen anions. The transition metal may include at least one of Mn, Fe, Ni, Co, Cr, Cu, Ti, Zn, V, Zr, and Ce; Y may include at least one of P, S, and Si, and n represents the valence state of (YO₄)ⁿ⁻; and the halogen may include at least one of F, Cl, and Br.

In some embodiments, the polyanionic compound may also be a class of compounds having sodium ions, tetrahedral (YO₄)ⁿ⁻ anion units, polyhedral units (ZO_{y})^{m+}, and optionally halogen anions. Y may include at least one of P, S, and Si, and n represents the valence state of (YO₄)ⁿ⁻; Z represents a transition metal and may include at least one of Mn, Fe, Ni, Co, Cr, Cu, Ti, Zn, V, Zr, and Ce, and m represents the valence state of (ZO_{y})^{m+}; and the halogen may include at least one of F, Cl, and Br.

In some embodiments, the polyanionic compound may be a polyanionic compound modified by doping, and the doping modification of the polyanionic compound may include at least one of sodium-site doping modification, transition metal-site doping modification, (YO₄)ⁿ⁻-site doping modification, (ZO_{y})^{m+}-site doping modification, halogen-site doping modification, and surface coating modification. As an example, the polyanionic compound may satisfy at least one of the chemical formulas NaFePO₄, Na₃V₂ (PO₄)₃ (sodium vanadium phosphate, referred to as NVP), Na₄Fe₃(PO₄)₂(P₂O₇), NaM'PO₄F (M' includes one or more of V, Fe, Mn, and Ni), and Na₃ (VO_{y})₂(PO₄)₂F_{3-2y} (0 ≤ y ≤ 1).

In some embodiments, the Prussian blue compound may be a class of compounds having sodium ions, transition metal ions, and cyanide ions (CN⁻). The transition metal may include at least one of Mn, Fe, Ni, Co, Cr, Cu, Ti, Zn, V, Zr, and Ce.

In some embodiments, the Prussian blue compound may be a Prussian blue compound modified by doping, and the doping modification of the Prussian blue compound may include at least one of sodium-site doping modification, transition metal-site doping modification, (YO₄)ⁿ⁻-site doping modification, (ZO_{y})^{m+}-site doping modification, halogen-site doping modification, and surface coating modification.

As an example, the Prussian blue compound may satisfy the chemical formula NaₐMe_{b}Me'_{c}(CN)₆, where Me and Me' each independently include at least one of Ni, Cu, Fe, Mn, Co, and Zn, 0 < a ≤ 2, 0 < b < 1, and 0 < c < 1.

As an example, in NaₐMe_{b}Me'_{c}(CN)₆, a may be 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, or 2; b may be 0.1, 0.2, 0.3, 0.4, 0.5, 0.6, 0.7, 0.8, or 0.9; and c may be 0.1, 0.2, 0.3, 0.4, 0.5, 0.6, 0.7, 0.8, or 0.9.

In some embodiments, the negative electrode plate 10 may include a negative electrode current collector 11, and the negative electrode current collector 11 may be made of metal foil, foam metal, or composite current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer 12. The composite current collector can be fabricated by forming a metal material (copper, copper alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

In some embodiments, the negative electrode plate 10 may be formed by calendering metal foil or by coating a current collector with a metal powder whose surface is coated with an inert layer.

In some embodiments, in order to improve the performance of the battery cell 5, the negative electrode plate 10 may include a negative electrode current collector 11 and a functional coating disposed on at least the surface of one side of the negative electrode current collector 11. The functional coating may include a carbon material coating (including a single-walled conductive carbon tube, a multi-walled conductive carbon tube, superconducting carbon, acetylene black, carbon black, Ketjen black, a carbon dot, a carbon nanotube, graphene, and a carbon nanofiber, soft carbon and hard carbon, and the like), a lithium-philic/sodium-philic metal composite coating, and the like.

In some embodiments, the negative electrode current collector 11 may be a composite current collector. For example, the composite current collector may include at least one of carbon cloth, carbon film, carbonaceous material, porous current collector, alloy-modified current collector, and lithium-philic/sodium-philic modified current collector.

In some embodiments, the separator 30 is a separation film. The present application does not particularly limit the type of the separator 30, and any porous-structure separation film known to have good chemical stability and mechanical stability may be selected and used.

As an example, the main material of the separator 30 may be selected from at least one of glass fiber, non-woven fabric, polyethylene, polypropylene, ceramic, and polyvinylidene fluoride. The separator 30 may be a single-layer film or a multi-layer composite film, and there is no particular limitation on this. When the separator 30 is a multi-layer composite film, the materials of the layers may be the same or different, and there is no particular limitation on this. The separator 30 may be a separate component located between the positive electrode plate 20 and the negative electrode plate 10, or may be attached to the surfaces of the positive and negative electrodes.

In some embodiments, the separator 30 is a solid electrolyte. The solid electrolyte is disposed between the positive electrode plate 20 and the negative electrode plate 10, and serves the dual functions of ion conduction and isolation between the positive electrode plate 20 and the negative electrode plate 10.

In some embodiments, the battery cell 5 may be a negative electrode-free sodium battery cell.

The negative electrode-free sodium battery cell refers to a battery in which, during the manufacturing process of the battery cell 5, no negative electrode active material layer is intentionally disposed on the negative electrode plate 10 side. For example, the negative electrode active material layer is not disposed on the negative electrode through a coating or deposition and other processes during the manufacturing process of the battery cell 5. During the first charge, sodium ions gain electrons at the negative electrode side and are deposited as sodium metal on the surface of the negative electrode current collector 11 to form a sodium metal phase. During discharge, the sodium metal can be converted into sodium ions and return to the positive electrode plate 20, thus achieving cyclic charge and discharge. Compared to other sodium batteries, the negative electrode-free sodium battery can achieve higher energy density due to the absence of the negative electrode active material layer.

As an example, in a negative electrode-free sodium battery cell 5, a functional coating is disposed on the surface of the negative electrode current collector 11 of the negative electrode plate 10.

In some embodiments, the CB value of the negative electrode-free sodium battery cell is less than or equal to 0.1.

The CB value is defined as the ratio of the unit area capacity of the negative electrode plate 10 to the unit area capacity of the positive electrode plate 20 in a secondary battery. Since the negative electrode-free battery cell contains no or only a little functional coating, the unit area capacity of the negative electrode plate 10 is relatively small, and the CB value of the battery is less than or equal to 0.1.

As an example, the CB value of the negative electrode-free sodium battery cell may be 0.01, 0.02, 0.03, 0.04, 0.05, 0.06, 0.07, 0.08, 0.09, or 0.1.

In the embodiments of the present application, the insulating member 40 is located at one end of the negative electrode plate 10 and/or the positive electrode plate 20 that is not cladded by the separator 30. The insulating member 40 has insulating properties, and the insulating member 40 can prevent the metal on the negative electrode current collector 11 from overlapping the positive electrode plate 20, such that the conductive path formed by the movement of the metal from the negative electrode plate 10 to the positive electrode plate 20 is interrupted, achieving an insulation effect.

In some embodiments, the insulating member 40 can confine the metal on the surface of one side of the insulating member 40 proximal to the negative electrode plate 10 during the movement process of the metal from the negative electrode plate 10 to the positive electrode plate 20, so as to reduce the occurrence of short circuit phenomenon after the metal moves from the negative electrode plate 10 to the positive electrode plate 20.

In some embodiments, the insulating member 40 can confine the metal inside the insulating member 40 during the movement process of the metal from the negative electrode plate 10 to the positive electrode plate 20, so as to reduce the occurrence of short circuit phenomenon after the metal moves from the negative electrode plate 10 to the positive electrode plate 20.

In the embodiments of the present application, the metal blocked by the insulating member 40 from moving from the negative electrode plate 10 to the positive electrode plate 20 includes: a metal that is extruded along the end surface of the negative electrode plate 10 that is not cladded by the separator 30 when the volume of the metal layer 12 on the surface of the negative electrode current collector 11 expands excessively during the charging process of the battery cell 5; and/or a molten metal formed after the metal layer 12 on the surface of the negative electrode current collector 11 is melted during the operation of the battery cell 5 at high temperatures; and/or a metal that is precipitated during the cyclic charge and discharge process of the battery and cannot participate in the battery cycle again.

In some embodiments, the insulating member 40 and the separator 30 are of a one-piece structure, and the material of the insulating member 40 is identical to the material of the separator 30.

In some embodiments, the insulating member 40 and the separator 30 are separately disposed.

As an example, the material of the insulating member 40 may include at least one of polypropylene, polyethylene, ethylene acrylic acid copolymer, and ion-crosslinked polymer resin.

As an example, the material of the insulating member 40 may include a substrate and a coating, the substrate may include at least one of polyethylene and polypropylene, and the coating may include at least one of polyethylene, Al₂O₃, γ-AlOOH, SiO₂, ZrO₂, CaO, and MgO.

The arrangement of the insulating member 40 can effectively reduce the movement of metal that is not blocked by the separator 30 from crossing the separator 30 and moving through the gap between the electrode assembly and the housing, thereby effectively reducing the direct connection between the positive electrode plate 20 and the negative electrode plate 10 due to the presence of conductive materials, and reducing the occurrence of internal short circuit phenomenon in the battery cell 5.

In some embodiments, the insulating member 40 is configured to block the movement of the metal deposited on the negative electrode current collector 11 towards the positive electrode plate 20.

In some cases, taking a metal battery as an example, where during the charging process of the battery cell 5, the positive electrode active material undergoes desodiation and sodium is deposited in situ on the surface of the negative electrode current collector 11, during the charging process of the battery cell 5, a metal layer 12 is formed on the surface of the negative electrode current collector 11, with its thickness increasing over time. When the battery cell 5 is at a relatively high temperature, the metal layer 12 melts due to the high temperature to form a molten metal. By disposing the insulating member 40 at one end of the negative electrode plate 10 and/or the positive electrode plate 20 that is not cladded by the separator 30, the metal deposited on the negative electrode current collector 11 is effectively blocked from moving towards the positive electrode plate 20, thereby reducing the occurrence of short circuit phenomenon caused by the direct overlapping of the metal on the surface of the negative electrode current collector 11 with the positive electrode plate 20.

In some cases, taking a sodium metal battery as an example, where during the charging process of the battery cell 5, the positive electrode active material undergoes desodiation and sodium is deposited in situ on the surface of the negative electrode current collector 11, during the charging process of the battery cell 5, referring to FIG. 1, in a fully discharged state, the negative electrode plate 10 includes the negative electrode current collector 11; referring to FIG. 2, as the sodium ions in the positive electrode active material layer 22 are gradually deintercalated and deposited on the surface of the negative electrode current collector 11 during the charging process, the metal layer 12 is gradually generated on the surface of the negative electrode current collector 11, that is, the thickness of the negative electrode plate 10 gradually increases, and the thickness of the negative electrode plate 10 reaches a maximum value when the battery cell 5 is fully charged; and when the thickness of the negative electrode plate 10 reaches the maximum value, the volume of other structures inside the electrode assembly remains unchanged, and accordingly, the interior of the electrode assembly is subject to an expansion stress generated due to the increase of the thickness of the negative electrode plate 10. The texture of the sodium metal layer 12 deposited on the surface of the negative electrode current collector 11 is relatively soft, and under expansion forces, the metal layer 12 is prone to being extruded from the end surface of the negative electrode plate 10 that is not cladded by the separator 30. The arrangement of the insulating member 40 on the end surface of the negative electrode plate 10 that is not cladded by the separator 30 can effectively prevent the end portion of the metal layer 12 on the surface of the negative electrode current collector 11 from being extruded out due to expansion, as well as edge short circuits caused by the deposition of the precipitated sodium metal at the bottom.

In some cases, during the cyclic charge and discharge process of the battery cell 5, a precipitated sodium material that cannot participate in the charge and discharge cycle of the battery cell 5 again is generated. The precipitated sodium material is also prone to accumulating on the end surface of the negative electrode plate 10 that is not cladded by the separator 30, and then gradually spreads along the end surface of the negative electrode plate 10 that is not cladded by the separator 30 to the end surface of the positive electrode plate 20 that is not cladded by the separator 30, achieving an overlap and thereby causing a short circuit phenomenon inside the battery cell 5. The arrangement of the insulating member 40 on the end surface of the negative electrode plate 10 that is not cladded by the separator 30 can effectively prevent the end portion of the metal layer 12 on the surface of the negative electrode current collector 11 from being extruded out due to expansion, as well as edge short circuits caused by the deposition of the precipitated sodium metal at the bottom.

In some embodiments, the positive electrode active material layer 22 includes a sodium-containing positive electrode active material, and the metal deposited on the negative electrode current collector 11 is a sodium metal.

When the positive electrode active material layer 22 includes the sodium-containing positive electrode active material, during the charging of the battery cell 5, the sodium metal is deposited on the surface of the negative electrode current collector 11 to form a sodium metal layer.

Sodium-based batteries have attracted wide attention due to the sufficiently high abundance of sodium in the earth, offering advantages such as low cost and broad application scenarios. When the positive electrode active material layer 22 includes the sodium-containing positive electrode active material, during the charging process of the battery cell 5, a sodium metal layer is formed on the surface of the negative electrode current collector 11, with its thickness increasing over time. The melting point of elemental sodium is 97.81 °C, such that when the battery is in an extremely high temperature condition, the sodium metal layer melts to form a molten sodium metal. In the present application, by disposing the insulating member 40 at one end of the negative electrode plate 10 and/or the positive electrode plate 20 that is not cladded by the separator 30, the metal deposited on the negative electrode current collector 11 is effectively blocked from moving towards the positive electrode plate 20, thereby reducing the occurrence of internal short circuit phenomenon in the battery cell 5.

In some embodiments, the insulating member 40 and the separator 30 are of a one-piece structure.

The one-piece structure refers to a structure that is formed through an integrated molding process, for example, a structure prepared in an integrated manner by using an extrusion process, an injection molding process, a die-casting process, or the like.

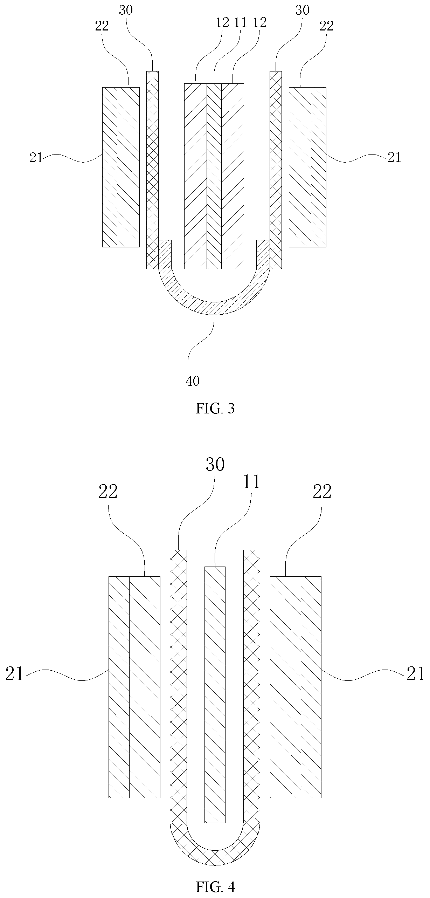

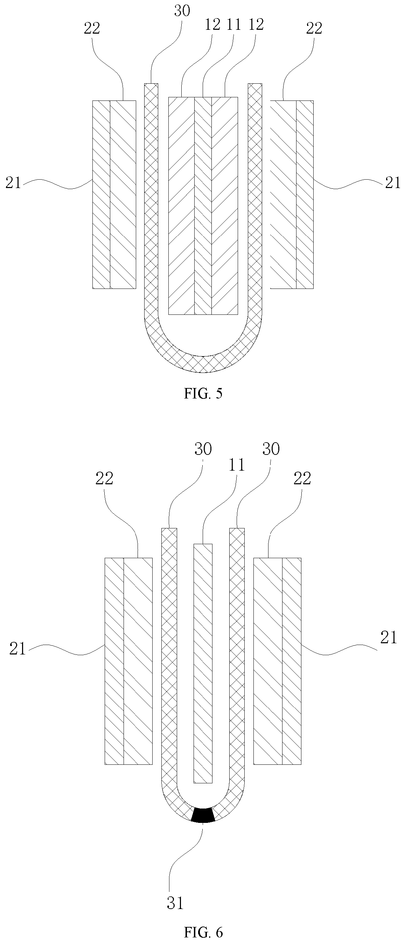

As an example, referring to FIG. 4 and FIG. 5, the insulating member 40 and the separator 30 can be of a one-piece structure, that is, in this case, the separator 30 serves not only to conduct ions and provide insulation between the positive electrode plate 20 and the negative electrode plate 10 to prevent short circuits, but also effectively reduces the movement of the metal deposited on the negative electrode current collector 11 towards the positive electrode plate 20 along the gap between the battery cell 5 and the housing. In the related art, at least one side of the adjacent end portions of two layers of adjacently disposed separators 30 is not connected, that is, there is one end of the negative electrode plate 10 and/or the positive electrode plate 20 that is not cladded by the separator 30.

By directly connecting one end of the negative electrode plate 10 and/or the positive electrode plate 20 that is not cladded by the separator 30 through the integrated separator 30, without requiring additional components, the accommodating space formed by curving and/or bending the insulating member 40 can effectively accommodate the molten metal generated after the metal layer 12 on the surface of the negative electrode current collector 11 is melted, thereby achieving the effect of effectively blocking the metal deposited on the negative electrode current collector 11 from moving towards the positive electrode plate 20, so as to reduce the occurrence of short circuit phenomenon inside the battery cell 5 due to the overlap between the metal layer 12 on the surface of the negative electrode plate 10 and the positive electrode plate 20.

In some embodiments, two adjacent layers of separators 30 are connected to form an insulating member 40.

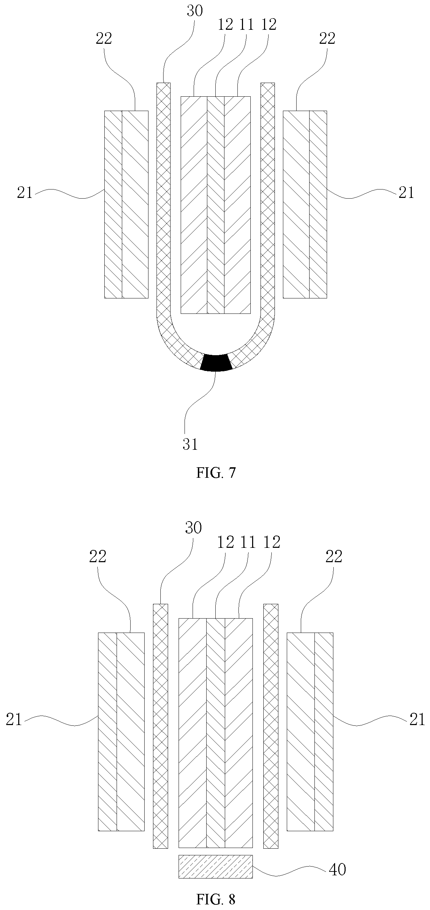

As an example, referring to FIG. 6 and FIG. 7, two adjacent layers of separators 30 are connected to form the insulating member 40, that is, in this case, the two adjacent layers of separators 30 and a connection structure 31 together form the separator 30. In the related art, at least one side of the adjacent end portions of two layers of adjacently disposed separators 30 is not connected, that is, there is one end of the negative electrode plate 10 and/or the positive electrode plate 20 that is not cladded by the separator 30. In the present application, the ends of the two adjacent layers of separators 30, which do not clad the negative electrode plate 10 and/or the positive electrode plate 20, are connected through the connection structure 31 to form the insulating member 40, such that no additional components are required, and the process steps can also be flexibly selected. The adjacent separators 30 can be connected to form the insulating member 40 when the separator 30 is disposed or after the separator 30 is disposed. The accommodating space formed together by the insulating member 40 and the connection structure 31 can effectively accommodate the molten metal generated after the metal layer 12 on the surface of the negative electrode current collector 11 is melted, such that the movement of the metal deposited on the negative electrode current collector 11 towards the positive electrode plate 20 can be effectively reduced. According to some specific embodiments of the present application, the connection structure 31 may be at least one of a binder and a hot-melt welding spot.

According to some embodiments of the present application, when the insulating member 40 and the separator 30 are of a one-piece structure or the insulating member 40 is formed by connecting two adjacent separators 30, the material of the insulating member 40 is identical to the material of the separator 30, that is, the material of the insulating member 40 and the material of the separator 30 may have the same chemical composition. For example, the material of the separator 30 may be selected from at least one of glass fiber, non-woven fabric, polyethylene, polypropylene, and polyvinylidene fluoride. The separator 30 may be a single-layer film or a multi-layer composite film. When the separator 30 is a multi-layer composite film, the materials of the layers may be the same or different, and those skilled in the art may make a selection based on actual situations.

In some embodiments, the separator 30 and the insulating member 40 are separately disposed, and two adjacent layers of separators 30 are connected through the insulating member 40.

The separate arrangement of the separator 30 and the insulating member 40 means that the separator 30 and the insulating member 40 are of a separated structure, and the separator 30 and the insulating member 40 are separately prepared using different molding processes. For example, the insulating member 40 and the separator 30 can be each independently prepared using processes such as an extrusion process, an injection molding process, or a die-casting process.

As an example, referring to FIG. 1 to FIG. 3, the separator 30 and the insulating member 40 can be separately disposed, and the two adjacent layers of separators 30 can be connected through the insulating member 40, such that the accommodating space formed by the insulating member 40 can effectively accommodate the molten metal generated after the metal layer 12 on the surface of the negative electrode current collector 11 is melted, thereby effectively blocking the metal deposited on the negative electrode current collector 11 from moving to the positive electrode plate 20, and further reducing the occurrence of internal short circuit phenomenon in the battery cell 5.

As an example, when the separator 30 and the insulating member 40 are separately disposed, the position of the insulating member 40 is not particularly limited. For example, one end of the insulating member 40 may be located on the surface of one side of the negative electrode current collector 11, and the other end may be located on the surface of the other side of the negative electrode current collector 11. For another example, one end of the insulating member 40 may be located on the surface of any side of the separator 30, and the other end may be located on the surface of any side of the adjacent separator 30. For yet another example, one end of the insulating member 40 may be located on the positive electrode active material layer 22 on the surface of one side of the positive electrode plate 20 proximal to the negative electrode plate 10, and the other end may be located on the positive electrode active material layer 22 on the surface of one side of another positive electrode plate 20 proximal to the negative electrode plate 10. For still another example, one end of the insulating member 40 may be located on the surface of one side of the positive electrode plate 20, and the other end may be located on the surface of the other side of the positive electrode plate 20.

In some embodiments, the insulating members 40 are connected to the end portions of two adjacent layers of separators 30, respectively.

As an example, two ends of the insulating member 40 can be connected to the end portions of the two adjacent layers of separators 30, respectively, such that the coverage of the insulating member 40 on the main surface of the separator 30 relative to the positive electrode plate 20 can be reduced while reducing the occurrence of internal short circuit phenomenon in the battery cell 5 achieved through the insulating member 40, thereby facilitating better ionic conductivity of the separator 30. In some embodiments of the present application, the surface of the separator 30 may be provided with an adhesive coating, and two ends of the insulating member 40 may be connected to the separator 30 through the adhesive coating.

In some embodiments, the porosity of the insulating member 40 at 25 °C is not greater than 10%.

The porosity can be determined through a gas replacement method. Specifically, it can be obtained by testing according to GB/T 24586-2009. Specifically, the insulating member 40 can be immersed in ethyl methyl carbonate (EMC) for cleaning, followed by measurement using the gas replacement method. The porosity of the insulating member 40 is defined as the percentage of the pore volume of the insulating member 40 to the total volume of the insulating member 40, and the calculation formula is: porosity = (V - V₀)/V × 100%, where V₀ is the true volume and V is the apparent volume.

As an example, in order to further improve the accommodating effect of the accommodating space formed by the insulating member 40 on the molten metal and prevent the molten metal from penetrating through the insulating member 40, the porosity of the insulating member 40 can be not greater than 10% at 25 °C, such that the insulating member 40 can further prevent the molten metal from penetrating through the insulating member 40 and then overlapping the positive electrode plate 20 under both normal temperature and high temperature conditions.

As an example, the porosity of the insulating member 40 at 25 °C is 1%, 2%, 3%, 4%, 5%, 6%, 7%, 8%, 9%, or 10%.

In some embodiments, the pore diameter of the insulating member 40 is not greater than 50 nm.

The insulating member 40 may be a closed-pore material at normal temperature. The pore diameter of the insulating member 40 may be obtained by testing according to GB/T 21650.2-2008. The thickness of the insulating member 40 may be measured using a vernier caliper. The thickness of the insulating member 40 refers to the mean distance value between two main surfaces of the insulating member 40 in the thickness direction.

As an example, the pore diameter of the insulating member 40 may be not greater than 50 nm. When the pore diameter of the insulating member 40 falls within the above range, the metal cannot enter the interior of the insulating member 40, thereby effectively reducing the occurrence of metal penetration through the insulating member 40 and overlapping the positive electrode plate 20. The function of reducing the movement of the metal deposited on the surface of the negative electrode plate 10 from the negative electrode plate 10 to the positive electrode plate 20, thereby lowering the risk of metal penetration through the insulating member 40 and overlapping the positive electrode plate 20.

As an example, the pore diameter of the insulating member 40 may be 1 nm, 2 nm, 3 nm, 4 nm, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, 21 nm, 22 nm, 23 nm, 24 nm, 25 nm, 26 nm, 27 nm, 28 nm, 29 nm, 30 nm, 31 nm, 32 nm, 33 nm, 34 nm, 35 nm, 36 nm, 37 nm, 38 nm, 39 nm, 40 nm, 41 nm, 42 nm, 43 nm, 44 nm, 45 nm, 46 nm, 47 nm, 48 nm, 49 nm, or 50 nm.

As an example, the thickness of the insulating member 40 is 3 µm to 50 µm. When the thickness of the insulating member 40 falls within the aforementioned range, the thickness of the insulating member 40 is moderate, which can reduce the risk of metal penetration through the insulating member 40 due to excessive thinness of the insulating member 40, and prevent the insulating member 40 from occupying too much space inside the battery cell 5 due to excessive thickness of the insulating member 40, which can lead to a decrease in the energy density of the battery cell 5.

As an example, the thickness of the insulating member 40 may be 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, or 50 µm.

In some embodiments, the insulating member 40 includes at least one of polypropylene, polyethylene, ethylene acrylic acid copolymer, and ion-crosslinked polymer resin.

As an example, when the insulating member 40 and the separator 30 are separately disposed, the material of the insulating member 40 may include at least one of polypropylene, polyethylene, ethylene acrylic acid copolymer, and ion-crosslinked polymer resin.

In some embodiments, the porosity of the insulating member 40 at 25 °C is 20% to 50%, and the porosity of the insulating member 40 at the pore-closing temperature is not greater than 10%.

The insulating member 40 is made of a high-temperature closed-pore material. The porosity of the insulating member 40 can be determined through a gas replacement method. Specifically, it can be obtained by testing according to GB/T 24586-2009. Specifically, the insulating member 40 can be immersed in ethyl methyl carbonate (EMC) for cleaning, followed by measurement using the gas replacement method. The porosity of the insulating member 40 is defined as the percentage of the pore volume of the insulating member 40 to the total volume of the insulating member 40, and the calculation formula is: porosity = (V - V₀)/V × 100%, where V₀ is the true volume and V is the apparent volume.

The pore-closing temperature of the insulating member 40 refers to the temperature at which the micropores of the insulating member 40 automatically close to prevent ion conduction. The pore-closing temperature of the insulating member 40 can be obtained by testing using an electrochemical method. Specifically, a symmetrical soft-pack battery is prepared by assembling in the sequence of an upper aluminum-plastic film, an upper electrode, the insulating member 40 to be tested, a lower electrode, and a lower aluminum-plastic film, followed by injecting a high-temperature-resistant electrolytic solution into the soft-pack battery. The upper and lower electrodes are made of the same material, e.g., copper foil or aluminum foil. An electrochemical workstation is used to measure the impedance of the soft-pack battery at different temperatures, and the point at which the impedance value shows a sudden increase is identified as the corresponding pore-closing temperature of the separation film. Meanwhile, based on the test results, physical heating at incremental temperature intervals of 5 °C can be performed to further test the pore diameter distribution for correction and verification of the pore-closing temperature.

As an example, referring to FIG. 1 to FIG. 3, in order to further improve the conduction effect of conductive ions between the positive electrode plate 20 and the negative electrode plate 10, the insulating member 40 can be configured to function as the separator 30 under normal temperature conditions, achieving the effect of conducting ions. In addition, under normal temperature conditions, the metal layer 12 deposited on the surface of the negative electrode plate 10 does not reach the melting temperature and will not melt. In this case, the insulating member 40 does not need to block the flow of the molten metal from the negative electrode plate 10 to the positive electrode plate 20. Under high temperature conditions, such as at the pore-closing temperature, the substrate and/or coating material is heated and undergoes polymerization, such that the pore diameter of the material is narrowed, and the insulating member 40 undergoes pore closure. This allows the insulating member 40 to block the flow of the metal deposited on the surface of the negative electrode plate 10 towards the positive electrode plate 20 after melting, that is, the insulating member 40 enables ion conduction under normal temperature conditions and blocks the flow of the molten metal and/or the extrusion of expanded metal at high temperatures. Specifically, when the porosity of the insulating member 40 at 25 °C is 20% to 50%, and the porosity of the insulating member 40 at the pore-closing temperature is not greater than 10%, the insulating member 40 functions to conduct the migration of conductive ions between the positive electrode plate 20 and the negative electrode plate 10, and reduce the occurrence of internal short circuit phenomenon in the battery cell 5.

As an example, the porosity of the insulating member 40 at 25 °C may be 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, or 50%.

As an example, the porosity of the insulating member 40 at the pore-closing temperature may be 1%, 2%, 3%, 4%, 5%, 6%, 7%, 8%, 9%, or 10%.

In some embodiments, the pore-closing temperature of the insulating member 40 is 60 °C to 97 °C. In some other embodiments, the pore-closing temperature of the insulating member 40 is 80 °C to 97 °C.

As an example, taking the positive electrode active material that includes a sodium-containing positive electrode active material as an example, the melting point of elemental sodium is 97.81 °C, such that the pore-closing temperature of the insulating member 40 may be 60 °C to 97 °C. According to some other embodiments of the present application, the pore-closing temperature of the insulating member 40 may be 80 °C to 97 °C, such that the insulating member 40 can function similarly to the separator 30 over the widest possible temperature range, thereby improving the conduction effect of conductive ions between the positive electrode plate 20 and the negative electrode plate 10. Furthermore, the insulating member 40 undergoes pore closure before the metal deposited on the surface of the negative electrode current collector 11 melts, thereby preventing the flow of the metal on the surface of the negative electrode plate 10 towards the positive electrode plate 20 after melting.

As an example, the pore-closing temperature of the insulating member 40 may be 60 °C, 61 °C, 62 °C, 63 °C, 64 °C, 65 °C, 66 °C, 67 °C, 68 °C, 69 °C, 70 °C, 71 °C, 72 °C, 73 °C, 74°C, 75 °C, 76 °C, 77 °C, 78 °C, 79 °C, 80 °C, 81 °C, 82 °C, 83 °C, 84 °C, 85 °C, 86 °C, 87 °C, 88 °C, 89 °C, 90 °C, 91 °C, 92 °C, 93 °C, 94 °C, 95 °C, 96 °C, or 97 °C.

In some embodiments, the insulating member 40 includes a substrate and a coating, the substrate includes at least one of polyethylene and polypropylene, and the coating includes at least one of polyethylene, Al₂O₃, γ-AlOOH, SiO₂, ZrO₂, CaO, and MgO.

Under high temperature conditions, the substrate and/or coating material is heated and undergoes polymerization, such that the pore diameter of the material is narrowed, and the insulating member 40 undergoes pore closure.

As an example, the insulating member 40 may include a substrate and a coating. Specifically, the substrate may be selected from a material with a relatively low bulk thermal polymerization temperature. For example, the substrate may include at least one of polyethylene and polypropylene. The coating may include at least one of polyethylene, Al₂O₃, γ-AlOOH, SiO₂, ZrO₂, CaO, and MgO.

As an example, when only the surface of one side of the insulating member 40 is provided with a coating, the coating may be located on the surface of one side of the insulating member 40 facing the negative electrode plate 10.

In some embodiments, the insulating member 40 includes a substrate and a coating, the pore diameter of the insulating member at 25 °C is 0.05 µm to 1 µm, and the pore diameter of the insulating member at a pore-closing temperature is not greater than 50 nm.

When the pore diameter of the insulating member 40 falls within the above range, the insulating member 40 can function to conduct conductive ions at normal temperature, and the separator 30 can function to block the flow of the metal deposited on the surface of the negative electrode plate 10 towards the positive electrode plate 20 after melting at high temperatures. Specifically, the insulating member 40 has a relatively large pore diameter under normal temperature conditions, which is conducive to the free flow of the electrolytic solution; the insulating member 40 undergoes pore closure at the pore-closing temperature and has a relatively small pore diameter, which can function to effectively reduce the movement of the metal deposited on the surface of the negative electrode plate 10 from the negative electrode plate 10 to the positive electrode plate 20; and the insulating member 40 can accommodate in both the normal temperature operation mode and the high temperature failure mode.

As an example, the pore diameter of the insulating member 40 at 25 °C may be 0.05 µm, 0.06 µm, 0.07 µm, 0.08 µm, 0.09 µm, or 1 µm.

As an example, the pore diameter of the insulating member 40 at the pore-closing temperature may be 1 nm, 2 nm, 3 nm, 4 nm, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, 21 nm, 22 nm, 23 nm, 24 nm, 25 nm, 26 nm, 27 nm, 28 nm, 29 nm, 30 nm, 31 nm, 32 nm, 33 nm, 34 nm, 35 nm, 36 nm, 37 nm, 38 nm, 39 nm, 40 nm, 41 nm, 42 nm, 43 nm, 44 nm, 45 nm, 46 nm, 47 nm, 48 nm, 49 nm, or 50 nm.

As an example, the insulating member 40 may satisfy a thickness of 3 µm to 50 µm. When the thickness of the insulating member 40 falls within the aforementioned range, the thickness of the insulating member 40 is moderate, which can reduce the risk of metal penetration through the insulating member 40 due to excessive thinness of the insulating member 40, and prevent the insulating member 40 from occupying too much space inside the battery cell 5 due to excessive thickness of the insulating member 40, which can lead to a decrease in the energy density of the battery cell 5.

The thickness of the insulating member 40 may be 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, or 50 µm.

In some embodiments, the insulating member 40 includes a substrate and a coating, and the thickness of the substrate may be 2 µm to 30 µm.

When the thickness of the substrate falls within the aforementioned range, the thickness of the substrate is moderate, which not only can provide mechanical support for the coating and improve the structural stability of the coating, but also can, based on the thickness of the substrate, reduce the risk of overlapping the positive electrode plate 20 by the metal after penetrating through the insulating member 40, and prevent the substrate from occupying too much space inside the battery cell 5 due to excessive thickness of the substrate, which can lead to a decrease in the energy density of the battery cell 5.

As an example, the thickness of the substrate may be 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, or 30 µm.

As an example, the substrate may be made of a material with a relatively low bulk thermal polymerization temperature, such as a polypropylene base film; and the coating may be made of a material with a lower bulk polymerization temperature than polypropylene, such as a polyethylene coating material formed by spraying.

In some embodiments, the insulating member 40 is of a porous structure, and the porous structure is configured to accommodate the metal deposited on the negative electrode current collector 11.

The porous structure refers to a network structure constituted by interconnected or closed pores. Porous materials have a relatively large specific surface area, providing an excellent adsorption effect. The pores inside the porous structure create a capillary effect, which is conducive to the dispersion of substances in the porous structure.

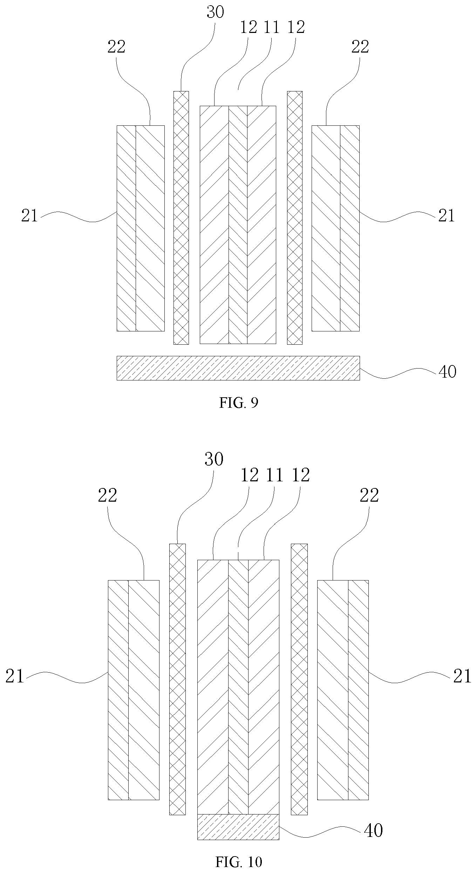

As an example, referring to FIG. 8 and FIG. 9, the insulating member 40 may be of a porous structure. The porous structure inside the insulating member 40 can be used to accommodate the metal deposited on the negative electrode current collector 11, such that the molten metal flowing down from the surface of the negative electrode current collector 11 can be absorbed and accommodated through the arrangement of the insulating member 40, thereby achieving a drainage effect and preventing the molten metal from gradually spreading and depositing along a bottom gap of the battery cell 5 until it contacts the positive electrode plate 20, which can ultimately leads to an overlap between the negative electrode plate 10 and the positive electrode plate 20 through the conductive sodium, resulting in a short circuit phenomenon.

In some embodiments, the insulating member 40 is disposed correspondingly at least on the end surface of the negative electrode plate 10 that is not cladded by the separator 30.

As an example, referring to FIG. 8, when the end surface of the negative electrode plate 10 and/or the positive electrode plate 20 of the battery cell 5 that is not cladded by the separator 30 is disposed downward, the insulating member 40 can be only disposed on the end surface of the negative electrode plate 10 that is not cladded by the separator 30, such that after the metal layer 12 on the surface of the negative electrode current collector 11 is melted at high temperatures to produce a molten metal, the molten metal flows down from the surface of the negative electrode current collector 11 and then exactly falls into the porous structure of the insulating member 40, and thus the insulating member 40 can effectively reduce the movement of the molten metal from the negative electrode plate 10 to the positive electrode plate 20. According to some other embodiments of the present application, referring to FIG. 9, in order to facilitate the arrangement of the insulating coating, the insulating member 40 can be disposed on the end surfaces of the same side of the positive electrode plate 20, the negative electrode plate 10, and the separator 30, rather than only on the end surface of the positive electrode plate 20 and the negative electrode plate 10 that is cladded by the separator 30, thereby further improving the absorption effect of the insulating member 40 on the molten metal on the surface of the negative electrode current collector 11.

In some embodiments, the insulating member 40 includes at least one of lignocellulose, foamed plastic polymer, polyether, polyvinyl alcohol, and polyester.

Materials such as lignocellulose, foamed plastic polymer, polyether, polyvinyl alcohol, and polyester contain numerous internal pore structures, which can be used to absorb the molten metal after the metal layer 12 on the surface of the negative electrode current collector 11 is melted at high temperatures. In addition, the above materials have excellent insulation performance, the insulating member 40 formed by the aforementioned materials exhibits a relatively high resistivity, and the metal located inside the insulating member 40 will not indirectly electrically connect to the positive electrode plate 20 due to the conductivity of the insulating member 40.

In some embodiments, the porosity of the insulating member 40 is 30% to 80%.

As an example, the porosity of the insulating member 40 may be 30% to 80%. When the porosity of the insulating member having a porous structure falls within the aforementioned range, the porous structure has a relatively large pore volume inside that can be used to accommodate metal, which is conducive to accommodating more metal, thereby effectively reducing the possibility that other metal cannot quickly enter the interior of the porous structure due to the interior of the porous structure being completely filled with metal, and then reducing the possibility that the metal that cannot enter the interior of the porous structure of the insulating member 40 spreads along the surface of the insulating member 40 to the positive electrode plate 20 to cause the occurrence of short circuit phenomenon.

As an example, the porosity of the insulating member 40 may be 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, or 80%.

In some embodiments, the pore diameter of the insulating member 40 is 0.5 µm to 100 µm.

As an example, the pore diameter of the insulating member 40 may be 0.5 µm to 100 µm. When the pore diameter of the insulating member having a porous structure falls within the aforementioned range, the porous structure has a relatively large number of pore structures with appropriate sizes inside, which facilitates the rapid dispersion of molten metal within the porous structure, thereby effectively reducing the occurrence of short circuit phenomenon due to the molten metal being unable to quickly enter the porous structure and then spreading along the surface of the insulating member 40 to the positive electrode plate 20.

As an examples, the pore diameter of the insulating member 40 may be 0.5 µm, 0.6 µm, 0.7 µm, 0.8 µm, 0.9 µm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, 60 µm, 61 µm, 62 µm, 63 µm, 64 µm, 65 µm, 66 µm, 67 µm, 68 µm, 69 µm, 70 µm, 71 µm, 72 µm, 73 µm, 74 µm, 75 µm, 76 µm, 77 µm, 78 µm, 79 µm, 80 µm, 81 µm, 82 µm, 83 µm, 84 µm, 85 µm, 86 µm, 87 µm, 88 µm, 89 µm, 90 µm, 91 µm, 92 µm, 93 µm, 94 µm, 95 µm, 96 µm, 97 µm, 98 µm, 99 µm, or 100 µm.

In some embodiments, the thickness of the insulating member 40 having a porous structure may be 1 mm to 10 mm.

When the thickness of the insulating member 40 falls within the above range, the interior of the insulating member 40 having a porous structure has more space for accommodating metal, which can be used to accommodate the metal moving from the negative electrode plate 10 to the positive electrode plate 20.

As an example, the thickness of the insulating member 40 having a porous structure may be 1 mm, 2 mm, 3 mm, 4 mm, 5 mm, 6 mm, 7 mm, 8 mm, 9 mm, or 10 mm.

In some embodiments, the resistivity of the insulating member 40 having a porous structure may be not less than 10 Ω·m.

When the resistivity of the insulating member 40 falls within the above range, the interior of the insulating member 40 has more space for accommodating metal, and the resistivity of the insulating member 40 is relatively high, such that the metal located inside the insulating member 40 will not indirectly electrically connect to the positive electrode plate 20 due to the conductivity of the insulating member 40.

The resistivity of the insulating member 40 can be tested by referring to the following method:

as an example, the resistivity of the insulating member 40 may be measured by testing using the four-probe method. Specifically, the insulating member 40 is immersed in ethyl methyl carbonate (EMC) for cleaning, and four copper plates, each measuring 1.5 cm in length, 1 cm in width, and 2 mm in thickness, are equidistantly fixed in a line, with the distance between the two middle copper plates being L (1 cm to 2 cm). The substrate for fixing the copper plates is an insulating material. During the test, the lower end surfaces of the four copper plates are pressed on the electrode plate under test, a direct current I is applied to the copper plates at the two ends, and a voltage V is measured across the two middle copper plates. The I and V values are read three times, and the average values of I and V are taken. The resistivity of the insulating member 40 at the test point is then calculated as V/I.

As an example, the resistivity of the insulating member 40 having a porous structure may be 10 Ω·m, 100 Ω·m, 1000 Ω·m, 1 × 10⁴ Ω·m, 1 × 10⁵ Ω·m, 1 × 10⁶ Ω·m, 1 × 10⁷ Ω·m, 1 × 10⁸ Ω·m, 1 × 10⁹ Ω·m, 1 × 10¹⁰ Ω·m, 1 × 10¹¹ Ω·m 1 × 10¹² Ω·m, 1 × 10¹³ Ω·m, 1 × 10¹⁴ Ω·m, 1 × 10¹⁵ Ω·m, or 1 × 10¹⁶ Ω·m.

According to some embodiments of the present application, when the insulating member 40 has a porous structure for accommodating the metal deposited on the negative electrode current collector 11, the interior of the porous structure of the insulating member 40 can further include a sodium-absorbing additive. The sodium-absorbing additive can react with the molten metal to consume the molten metal detached from the surface of the negative electrode current collector 11, thereby blocking the metal deposited on the surface of the negative electrode plate 10 from flowing to the positive electrode plate 20 after melting. Specifically, the functional group of the sodium-absorbing additive may include at least one of an alcoholic hydroxyl group (-OH), a phenolic hydroxyl group (-OH), and a carboxyl group (-COOH).

In some embodiments, the insulating member 40 is an insulating coating, and the insulating coating at least covers the end surface of the negative electrode plate 10 that is not cladded by the separator 30.

As an example, referring to FIG. 10, the insulating member 40 may be an insulating coating, and the insulating coating at least covers the end surface of the negative electrode plate 10 that is not cladded by the separator 30. Taking a sodium metal battery as an example, where during the charging process of the battery cell 5, the positive electrode active material undergoes desodiation and sodium is deposited in situ on the surface of the negative electrode current collector 11, during the charging process of the battery cell 5, referring to FIG. 1, when the battery is in a fully discharged state, the negative electrode plate 10 includes the negative electrode current collector 11; referring to FIG. 2, as the sodium ions in the positive electrode active material layer 22 are gradually deintercalated and deposited on the surface of the negative electrode current collector 11 during the charging process, the metal layer 12 is gradually generated on the surface of the negative electrode current collector 11, that is, the thickness of the negative electrode plate 10 gradually increases, and the thickness of the negative electrode plate 10 reaches a maximum value when the battery is fully charged; and when the thickness of the negative electrode plate 10 reaches the maximum value, the volume of other structures inside the electrode assembly remains unchanged, and accordingly, the interior of the electrode assembly is subject to an expansion stress generated due to the increase of the thickness of the negative electrode plate 10. The texture of the sodium metal layer 12 deposited on the surface of the negative electrode current collector 11 is relatively soft, and under expansion forces, the metal layer 12 is prone to being extruded from the end surface of the negative electrode plate 10 that is not cladded by the separator 30. During the cyclic charge and discharge process of the battery cell 5, a precipitated sodium material that cannot participate in the charge and discharge cycle of the battery cell 5 again is generated. The precipitated sodium material is also prone to accumulating on the end surface of the negative electrode plate 10 that is not cladded by the separator 30, and then gradually spreads along the end surface of the negative electrode plate 10 that is not cladded by the separator 30 to the end surface of the positive electrode plate 20 that is not cladded by the separator 30, achieving an overlap and thereby causing a short circuit phenomenon inside the battery cell 5. The arrangement of the insulating coating (i.e., the insulating member 40) on the end surface of the negative electrode plate 10 that is not cladded by the separator 30 can effectively prevent the end portion of the metal layer 12 on the surface of the negative electrode current collector 11 from being extruded out due to expansion, as well as edge short circuits caused by the deposition of the precipitated sodium metal at the bottom.

In some embodiments, the insulating coating covers the end surface of the electrode assembly that is not cladded by the separator 30.

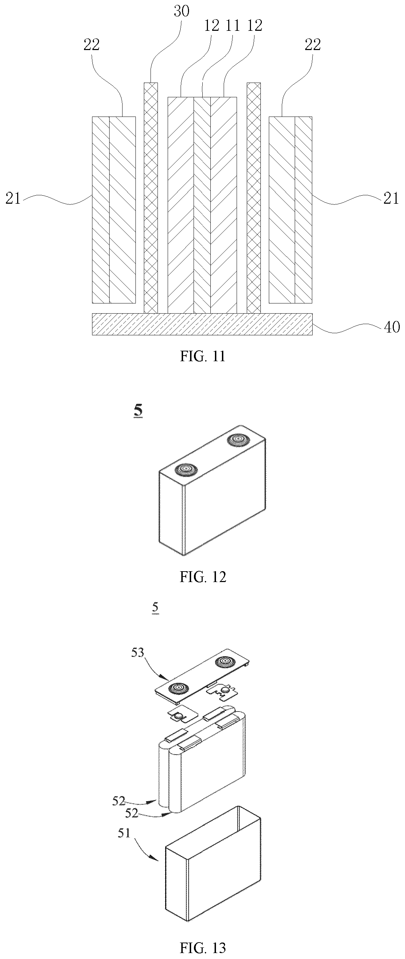

As an example, referring to FIG. 11, the insulating member 40 may cover the end surface of the electrode assembly that is not cladded by the separator 30. The arrangement of the insulating coating (i.e., the insulating member 40) on the surface of the electrode assembly that is not cladded by the separator 30 can further effectively prevent the end portion of the metal layer 12 on the surface of the negative electrode current collector 11 from being extruded out due to expansion, as well as edge short circuits caused by the deposition of the precipitated sodium metal at the bottom, thereby further reducing the occurrence of short circuit phenomenon inside the battery cell 5 caused by the overlapping of the metal on the surface of the negative electrode current collector 11 with the positive electrode plate 20.

In some embodiments, an insulating sheet is disposed on the surface of one side of the insulating member 40 away from the negative electrode plate 10.

As an example, the bottom support plate, serving as the bottom wall of the battery housing, can function as the aforementioned insulating sheet; as another example, the mylar sheet covering the entire outer surface of the electrode assembly can function as the aforementioned insulating sheet.

When the accommodating space formed by the insulating member 40 accommodates the molten metal, the insulating sheet can effectively prevent the molten metal from overlapping the positive electrode plate 20 after penetrating through the insulating member 40. When the interior of the insulating member 40 has a porous structure for absorbing the molten metal, the insulating sheet can effectively prevent the molten metal from spreading and diffusing on the surface of one side of the insulating member 40 away from the negative electrode plate 10, and then overlapping the positive electrode plate 20.

In another aspect of the embodiments of the present application, the present application provides a method for manufacturing a battery cell 5, including: forming an electrode assembly from a positive electrode plate 20, a separator 30, and a negative electrode plate 10 through a winding or stacking process; and disposing an insulating member 40 at one end of the negative electrode plate 10 and/or the positive electrode plate 20 that is not cladded by the separator 30. Therefore, an insulating member 40 structure can be disposed in the battery cell 5 through a relatively simple method, and the arrangement of the insulating member 40 can effectively reduce the occurrence of internal short circuit phenomenon in the battery cell 5.

In some embodiments, the end portions of two adjacent layers of separators 30 proximal to the end of the negative electrode plate 10 and/or the positive electrode plate 20 that is not cladded by the separator 30 are connected to form the insulating member 40.

As an example, when the insulating member 40 and the separator 30 are of a one-piece structure, the separator 30 is extended to the end of the negative electrode plate 10 and/or the positive electrode plate 20 that is not cladded by the separator 30 during the winding or stacking process.

In some embodiments, two adjacent layers of separators 30 are connected through the insulating member 40.

As an example, when the insulating member 40 and the separator 30 are of a separated structure, the process sequence of disposing the insulating member 40 can be flexibly selected. The insulating member 40 can be disposed after the separator 30 is disposed. For example, the end surfaces of the insulating member 40 that are respectively proximal to the two layers of separators 30 can be connected.

As an example, when adjacent separators 30 form an insulating member 40 through a connection structure 31, after the winding or stacking process is completed, the end portions of the two adjacent layers of separators 30 proximal to one end of the negative electrode plate 10 and/or the positive electrode plate 20 that is not cladded by the separator 30 are connected to form the insulating member 40, and the connection may include at least one of a hot-melt process and a bonding process.

As an example, when the insulating member 40 and the separator 30 are separately disposed, the insulating member 40 can be placed in a preset position, and after the winding or stacking process is completed, an adhesive coating on the separator 30 can be bonded to the insulating member 40 by means of a conventional battery cell hot pressing process.

In some embodiments, at least an end surface of the negative electrode plate 10 that is not cladded by the separator 30 is coated with the insulating member 40.

As an example, when the insulating member 40 is an insulating coating, at least the end surface of the negative electrode plate that is not cladded by the separator 30 can be coated with the insulating member 40 after the winding or stacking process is completed. Specifically, the insulating coating can be formed by spraying the insulating coating at a preset position followed by curing, or by applying a fusible insulating coating at a preset position and subsequently performing hot pressing and fusion treatment to achieve final shaping.

In some embodiments, an insulating sheet is disposed on one side of the insulating member 40 away from the negative electrode plate 10.

After the insulating member 40 is disposed, an insulating sheet can be further disposed on one side of the insulating member 40 away from the negative electrode plate 10. The insulating sheet can be disposed by utilizing at least one of the following: the arrangement of the bottom support plate of the battery housing and/or the arrangement of the mylar sheet.

It should be noted that the relevant parameters of the battery cell 5 described above may refer to part or all of the technical features in the aforementioned embodiments. Any aspects of the method for manufacturing the battery cell 5 that are not explicitly described in this embodiment may be referenced from the aforementioned embodiments and related drawings, which are not further detailed here.

In yet another aspect of the embodiments of the present application, the present application provides a battery, including the aforementioned battery cell 5, and/or the battery cell 5 manufactured using the aforementioned method. Therefore, the battery has all the features and advantages of the aforementioned battery cell 5 and/or the aforementioned method for manufacturing the battery cell 5, which are not further detailed here. Typically, a battery includes a positive electrode plate 20, a negative electrode plate 10, an electrolyte, and a separator 30. During the charging and discharging process of the battery, active ions are intercalated and deintercalated back and forth between the positive electrode plate 20 and the negative electrode plate 10. The electrolyte conducts ions between the positive electrode plate 20 and the negative electrode plate 10. The separator 30 is disposed between the positive electrode plate 20 and the negative electrode plate 10 to primarily prevent the positive and negative electrodes from short-circuiting, while allowing the passage of ions.

As an example, the present application does not particularly limit the shape of the battery cell, and it may have a cylindrical shape, a prismatic shape, or any other shape. For example, FIG. 12 illustrates a battery cell 5 having a prismatic structure as one example. Specifically, referring to FIG. 13, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity. The positive electrode plate 20, the negative electrode plate 10, and the separator 30 may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the battery cell 5 may be one or more, and those skilled in the art can select the number according to specific and actual needs.

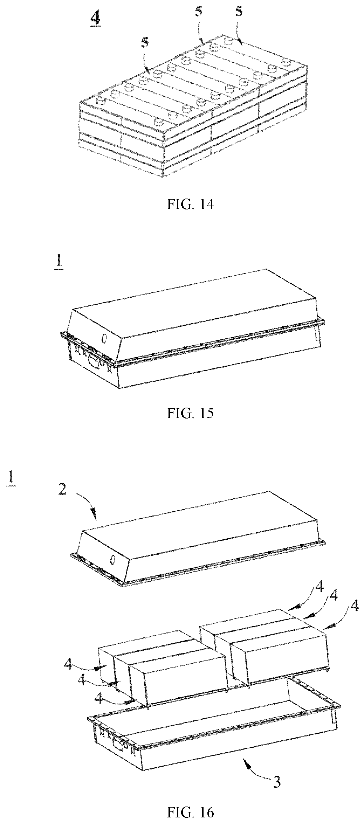

As an example, batteries may be assembled into a battery module. The number of batteries included in the battery module may be one or more, and the specific number may be selected by those skilled in the art based on the use and capacity of the battery module. FIG. 14 shows a battery module 4 as one example. Referring to FIG. 14, in the battery module 4, a plurality of battery cells 5 may be sequentially arranged in a length direction of the battery module 4. Certainly, the arrangement may also be in any other manner. Further, the plurality of battery cells 5 may be fixed by a fastener. The battery module 4 may further include a shell having an accommodating space in which the plurality of battery cells 5 are accommodated.

In the descriptions of the present application, "a plurality" means two or more.

As an example, the battery module described above may also be assembled into a battery pack. The number of battery modules included in the battery pack may be one or more, and the specific number may be selected by those skilled in the art based on the use and capacity of the battery pack. FIG. 15 and FIG. 16 show a battery pack 1 as one example. Referring to FIG. 15 and

FIG. 16, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In yet another aspect of the embodiment of the present application, the present application provides an electric device, including the aforementioned battery cell 5, and/or the battery cell 5 manufactured using the aforementioned method, and/or the aforementioned battery. Therefore, the battery has all the features and advantages of the aforementioned battery cell 5, and/or the aforementioned method for manufacturing the battery cell 5, and/or the aforementioned battery, which are not further detailed here. The battery, the battery module, or the battery pack can be used as a power source for the electric device, and they can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like. A battery, a battery module, or a battery pack may be selected based on the use requirements of the electric device.

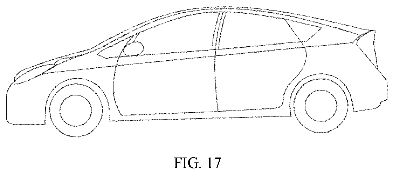

As an example, FIG. 17 shows an electric device as one example. The electric device is a pure electric vehicle, a hybrid electric vehicle, a plug-in hybrid electric vehicle, or the like. To meet the requirements of the electric device for high power and high energy density of the battery, the battery pack or the battery module may be used.

As an example, the electric device may also be a mobile phone, a tablet computer, a laptop computer, or the like. The device is generally required to be light and thin, and a battery can thus be used as a power source.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

In some embodiments of the present application, as shown in FIG. 1 to FIG. 3, the separator 30 and the insulating member 40 are separately disposed, and two adjacent layers of separators 30 are connected through the insulating member 40, where the surface of the separator is provided with an adhesive coating, and two ends of the insulating member 40 are connected to the separator 30 through the adhesive coating. The insulating member 40 is made of polypropylene, with a porosity of 6% and a thickness of 20 µm. The accommodating space formed by the insulating member can effectively accommodate the molten metal generated after the metal layer on the surface of the negative electrode current collector is melted, thereby effectively blocking the metal deposited on the negative electrode current collector and/or the metal extruded out due to the volume expansion of the metal layer from moving from the negative electrode plate to the positive electrode plate, and further reducing the occurrence of internal short circuit phenomenon in the battery cell.

In some embodiments of the present application, as shown in FIG. 4 and FIG. 5, the insulating member 40 and the separator 30 are of a one-piece structure. The accommodating space formed by extending the separator as well as curving and/or bending can effectively accommodate the molten metal generated after the metal layer on the surface of the negative electrode current collector is melted, and then the stacking process or the winding process is used, such that the metal deposited on the negative electrode current collector and/or the metal extruded out due to the volume expansion of the metal layer can be blocked from moving from the negative electrode plate to the positive electrode plate, thereby further reducing the occurrence of internal short circuit phenomenon in the battery cell.

In some embodiments of the present application, as shown in FIG. 6 and FIG. 7, the ends of the two adjacent layers of separators 30, which do not clad the negative electrode plate and/or the positive electrode plate, are connected through the connection structure 31 to form the insulating member 40, where the connection structure is an adhesive. The accommodating space formed together by the two adjacent layers of separators can effectively accommodate the molten metal generated after the metal layer on the surface of the negative electrode current collector is melted and/or the metal extruded out due to the volume expansion of the metal layer, such that the movement of the metal deposited on the negative electrode current collector towards the positive electrode plate can be effectively reduced.

In some embodiments of the present application, as shown in FIG. 9, the end surface of the negative electrode plate and/or the positive electrode plate that is not cladded by the separator is disposed downward, and the insulating member 40 is disposed on the end surface of the same side of the positive electrode plate, the negative electrode plate, and the separator. The insulating member 40 is made of a composite of a polypropylene substrate and a polyethylene coating, with a porosity of 5% and a thickness of 15 µm. The insulating sheet is located on the surface of one side of the insulating member away from the negative electrode plate, and the insulating sheet is a mylar sheet. Therefore, the molten metal flows down from the surface of the negative electrode current collector and then exactly falls into the porous structure of the insulating member, such that the insulating member can effectively reduce the movement of the molten metal from the negative electrode plate to the positive electrode plate.

In some embodiments of the present application, as shown in FIG. 11, the insulating member 40 is an insulating coating, and the insulating member 40 covers the end surface of the electrode assembly that is not cladded by the separator. For ease of configuration, the insulating coating also covers the end surface of the insulating member. The arrangement of the insulating coating (i.e., the insulating member) on the surface of the electrode assembly that is not cladded by the separator can further effectively prevent the end portion of the metal layer on the surface of the negative electrode current collector from being extruded out due to expansion, and prevent an edge short circuit caused by the overlapping of the precipitated sodium metal, which is deposited at the bottom, with the positive electrode plate.

In the description of this specification, the reference terms "one embodiment", "another embodiment", and the like mean that the specific features, structures, materials or characteristics described in connection with the embodiments are included in at least one embodiment of the present application. In this specification, the schematic expressions of the above terms are not necessarily directed to the same embodiment or example. Moreover, the specific features, structures, materials, or characteristics described may be combined appropriately in any one or more embodiments or examples. In addition, various embodiments or examples and features of various embodiments or examples described in this specification can be combined by one skilled in the art to the extent that they do not contradict each other. In addition, it should be noted that in this specification, the terms "first" and "second" are used herein for descriptive purposes only and should not be construed as indicating or implying relative importance or implicitly indicating the number of technical features described. Although the embodiments of the present application have been shown and described above, it will be understood that the above embodiments are exemplary and not to be construed as limiting the present application, and that changes, modifications, substitutions, and alterations can be made to the above embodiments by those of ordinary skill in the art within the scope of the present application.

## Claims

1. A battery cell, comprising an electrode assembly, comprising:
a positive electrode plate, comprising a positive electrode current collector and a positive electrode active material layer at least located on a surface of one side of the positive electrode current collector;
a negative electrode plate, comprising a negative electrode current collector;
a separator, located between the positive electrode plate and the negative electrode plate; and
an insulating member, located at one end of the negative electrode plate and/or the positive electrode plate that is not cladded by the separator.

2. The battery cell according to claim **1,** wherein the insulating member is configured to block a metal deposited on the negative electrode current collector from moving towards the positive electrode plate.

3. The battery cell according to claim 1 or 2, wherein the positive electrode active material layer comprises a sodium-containing positive electrode active material, and the metal deposited on the negative electrode current collector is a sodium metal.

4. The battery cell according to any one of claims 1 to 3, wherein the insulating member and the separator are of a one-piece structure.

5. The battery cell according to claim 4, wherein two adjacent layers of the separators are connected to form the insulating member.

6. The battery cell according to any one of claims 1 to 3, wherein the separator and the insulating member are arranged separately, and two adjacent layers of the separators are connected through the insulating member.

7. The battery cell according to claim 6, wherein the insulating member is connected to end portions of the two adjacent layers of the separators.

8. The battery cell according to any one of claims 1 to 7, wherein a porosity of the insulating member at 25 °C is not greater than 10%.

9. The battery cell according to claim 8, wherein the insulating member comprises at least one of polypropylene, polyethylene, ethylene acrylic acid copolymer, and ion-crosslinked polymer resin.

10. The battery cell according to claim 8 or 9, wherein a pore diameter of the insulating member is not greater than 50 nm.

11. The battery cell according to any one of claims 1 to 7, wherein a porosity of the insulating member at 25 °C is 20% to 50%, and a porosity of the insulating member at a pore-closing temperature is not greater than 10%.

12. The battery cell according to claim 11, wherein:
the pore-closing temperature of the insulating member is 60 °C to 97 °C; and
preferably, the pore-closing temperature of the insulating member is 80 °C to 97 °C.

13. The battery cell according to claim 11 or 12, wherein the insulating member comprises a substrate and a coating, the substrate comprises at least one of polyethylene and polypropylene, and the coating comprises at least one of polyethylene, Al₂O₃, γ-AlOOH, SiO₂, ZrO₂, CaO, and MgO.

14. The battery cell according to any one of claims 11 to 13, wherein a pore diameter of the insulating member at 25 °C is 0.05 µm to 1 µm, and a pore diameter of the insulating member at the pore-closing temperature is not greater than 50 nm.

15. The battery cell according to any one of claims 1 to 3, 6, and 7, wherein the insulating member is of a porous structure, and the porous structure is configured to accommodate the metal deposited on the negative electrode current collector.

16. The battery cell according to claim 15, wherein the insulating member is disposed correspondingly at least on an end surface of the negative electrode plate that is not cladded by the separator.

17. The battery cell according to claim 15 or 16, wherein the insulating member comprises at least one of lignocellulose, foamed plastic polymer, polyether, polyvinyl alcohol, and polyester.

18. The battery cell according to any one of claims 15 to 17, wherein a porosity of the insulating member is 30% to 80%.

19. The battery cell according to any one of claims 15 to 18, wherein a pore diameter of the insulating member is 0.5 µm to 100 µm.

20. The battery cell according to any one of claims 1 to 3, 6, and 7, wherein the insulating member is an insulating coating, and the insulating coating at least covers an end surface of the negative electrode plate that is not cladded by the separator.

21. The battery cell according to claim 20, wherein the insulating coating covers an end surface of the electrode assembly that is not cladded by the separator.

22. The battery cell according to any one of claims 1 to 21, wherein the surface of one side of the insulating member away from the negative electrode plate is provided with an insulating sheet.

23. The battery cell according to any one of claims 1 to 22, wherein the battery cell is a negative electrode-free sodium battery cell.

24. A method for manufacturing a battery cell, comprising:
forming an electrode assembly from a positive electrode plate, a separator, and a negative electrode plate through a winding or stacking process; and
disposing an insulating member at one end of the negative electrode plate and/or the positive electrode plate that is not cladded by the separator.

25. The method according to claim 24, wherein end portions of two adjacent layers of the separators proximal to the end of the negative electrode plate and/or the positive electrode plate that is not cladded by the separators are connected to form the insulating member.

26. The method according to claim 24, wherein two adjacent layers of the separators are connected through the insulating member.

27. The method according to claim 24, wherein at least an end surface of the negative electrode plate that is not cladded by the separator is coated with the insulating member.

28. The method according to any one of claims 24 to 27, wherein an insulating sheet is disposed on one side of the insulating member away from the negative electrode plate.

29. A battery, comprising the battery cell according to any one of claims 1 to 23, and/or a battery cell manufactured by the method according to any one of claims 24 to 28.

30. An electric device, comprising the battery cell according to any one of claims 1 to 23, and/or a battery cell manufactured by the method according to any one of claims 24 to 28, and/or the battery according to claim 29.
